# EUROPÄISCHE PATENTSCHRIFT

(11) **EP 1 661 614 B1**
(45) Veröffentlichungstag und Bekanntmachung des Hinweises auf die Patenterteilung: **12.12.2007**
(21) Anmeldenummer: 05109441.5
(22) Anmeldetag: 11.10.2005
(51) Int. Cl.: B01D 46/24, F02M 35/02

(54) **Gehäuse**
Casing
Boîtier

(30) Priorität: 25.11.2004 DE 102004000056
(43) Veröffentlichungstag der Anmeldung: 31.05.2006
(73) Patentinhaber: MANN+HUMMEL GmbH, 71638 Ludwigsburg (DE)
(72) Erfinder: Bauder, Ralf, 68775 Ketsch (DE); Dworatzek, Klemens, 68535 Edingen (DE)

(56) Entgegenhaltungen:
- WO-A-99/14483
- US-A- 4 215 790
- US-B1- 6 299 661

## Beschreibung

### Technisches Gebiet

Die Erfindung betrifft ein Gehäuse, insbesondere Filtergehäuse, vorzugsweise Luftfiltergehäuse nach dem Oberbegriff des Patentanspruchs 1.

### Stand der Technik

Im Stand der Technik sind hohlzylindrische Luftfiltergehäuse mit Bajonettverschlüssen bekannt. Derartige Bajonettverschlüsse zeichnen sich in der Regel durch Rastebenen an einem Gehäuseteil und Rastnocken am damit zu verbindenden Gehäuseteil aus. Zum Verbinden dieser beiden Gehäusehälften werden die Rastnocken und die Rastebenen paarweise angeordnet. In Abhängigkeit der Größe und des Durchmessers des Gehäuses haben sich zwei bis acht miteinander korrespondierende Rastpaare bewährt. Je nach Gehäuseform werden diese radial nacheinander oder gegenüberliegend angeordnet. Im Inneren der Gehäuse werden normalerweise hohlzylindrische, radialdurchströmte Filterelemente oder zylindrische, axial durchströmte Filterelemente verwendet. Im Wartungsfall ist es notwendig diese Elemente zu wechseln, wobei die Gehäuse derart trennbar ausgelegt sein müssen, dass dieser Wechsel problemlos möglich ist. Der oben beschriebene Bajonettverschluss bietet hier die Möglichkeit einer einfachen und werkzeuglosen Wartung.

Die WO 99/14483 A1 beschreibt verschiedene Ausführungsformen eines Bajonettverschlusses zur Verbindung von hohlzylindrischen Luftfiltergehäuseteilen. Hierbei wird ein hohlzylindrisches Deckelteil über die Bajonettverbindung mit einem hohlzylindrischen unterem Gehäuseteil verbunden. Das Deckelteil weist hierzu im Bereich der zylindrischen Verbindungsöffnung an der innen liegenden umlaufenden Mantelfläche die entsprechenden Rastelemente auf. Dahingegen weist das untere Gehäuseteil im Bereich der zylindrischen Verbindungsöffnung die jeweiligen Rastelemente an der außen liegenden umlaufenden Mantelfläche auf. In einer Ausgestaltung weisen die Rastebenen eine L-Form auf, wobei einer der Schenkel parallel zur Drehbewegung beim Verschließen und der andere Schenkel senkrecht dazu angeordnet ist. Der hierzu korrespondierende Rastnocken auf dem anderen Gehäuseteil ist in Form eines U's ausgeformt. Gemäß einer weiteren Ausführungsform ist die Rastebene in Form eines P's gestaltet und der dazugehörige Rastnocken weist eine Art Bananenform auf. Der jeweils senkrecht zur Rotationsverschließ- oder Öffnungsbewegung ausgestaltete Teil der Rastebene sei es bei der L-förmigen oder bei der P-förmigen Ausgestaltung wirkt hierbei als Anschlag. In beiden Ausführungsformen werden immer dieselben Rastpaarungen verwendet. Dabei übernimmt jede Rastpaarung die Funktionen Drehmomenteinstellung des Verschließens und Öffnens, Einstellen der Haltekraft und Einstellung des radialen und axialen Spiels im verschlossenen Zustand.

Neben den bekannten Vorteilen wie beispielsweise niedrige Kosten, einfache Handhabung und hohe Integration entstehen trotzdem einige Nachteile hierbei. Insbesondere die Abstimmung ist bei der im Stand der Technik bekannten Lösung als problematisch zu bewerten. Bei den oben beschriebenen Bajonettlösungen sind die abzustimmenden Parameter in den jeweiligen Rastpaaren kombiniert, so dass beim Ändern einer Funktion eine oder mehrere Funktionen ebenfalls geändert werden. Die Funktionen sind hierbei Drehmoment beim Schließen, Drehmoment beim Öffnen, Zuhaltekraft in axialer Richtung, Zuhaltekraft in radialer Richtung, Spiel in axialer Richtung und Spiel in radialer Richtung. Durch den Nachteil das beim Ändern einer Funktion eine oder mehrere Funktionen ebenfalls geändert werden wird das Abstimmen wesentlich erschwert, da nicht jede beliebige Kombination möglich ist und stets ein Kompromiss gefunden werden muss.

Die Aufgabe der Erfindung ist es daher ein möglichst einfaches Bajonettsystem zum Verbinden zweier Gehäusehälften zu finden, welches sich sowohl einfach abstimmen lässt als auch eine einfache Handhabung gewährleistet. Weiterhin sollte es einfach und kostengünstig in der Herstellung sein.

Diese Aufgabe wird durch die Merkmale des Patentanspruches 1 gelöst.

### Offenbarung der Erfindung

Die Erfindung betrifft ein Gehäuse, insbesondere Filtergehäuse, vorzugsweise Luftfiltergehäuse, welches wenigstens zwei hohlzylindrische Gehäuseteile aufweist. Dabei sind ein erstes und ein zweites Gehäuseteil über eine rotative Relativdrehbewegung zueinander lösbar verbindbar, wobei an den Gehäuseteilen jeweils zueinander korrespondierende Rastmittel angeordnet sind. Dabei sind eine Anzahl von Rastmitteln im Bereich der Verbindungsstelle der beiden hohlzylindrischen Gehäuseteile am Außenumfang des ersten Gehäuseteils angeordnet und eine dazu korrespondierende Anzahl von Rastmitteln am Innenumfang im Bereich der Verbindungsstelle des zweiten Gehäuseteils angeordnet. Das erste Gehäuseteil weist einen geringfügig kleineren Durchmesser als das zweite Gehäuseteil im Bereich der Verbindungsstelle auf, so dass beim Verbinden der beiden Gehäuseteilen miteinander das zweite Gehäuseteil über eine gewisse axiale Länge über das erste Gehäuseteil geschoben werden kann. Hierbei weist das erste Gehäuseteil einen axialen Anschlag für das zweite Gehäuseteil auf, so dass bei Erreichen des axialen Anschlags und darauf folgender rotativer Verdrehung der beiden Gehäuseteile zueinander eine lösbare Verbindung über die Rastmittel hergestellt wird. Hierbei bildet die Anschlagstelle ein Gegenlager für die miteinander korrespondieren Rastmittel. Erfindungsgemäß weist eine erste Anzahl von Rastmitteln Mittel zum Halten der Verbindung zwischen den Gehäuseteilen auf und eine zweite Anzahl von Rastmitteln Mittel zur Einstellung des Drehmoments zum Öffnen und Mittel zur Einstellung des Drehmoments zum Schließen des Gehäuses. Dabei bestimmen bevorzugt die Mittel zum Halten der Verbindung die Zuhaltekräfte in axialer Richtung und das axiale Spiel sowie das radiale Spiel und die Mittel zur Einstellung des Drehmoments die jeweils notwendigen Drehmomente zum Öffnen und Schließen der Verbindung sowie die Zuhaltekraft in radialer Richtung. In Abhängigkeit der Größe und des Durchmessers der Gehäuseteile ist die Anzahl der Rastmittel derart festzulegen, dass die benötigten Kräfte und Drehmomente aufgebracht werden können und dem Material angepasst sind. Durch diese Trennung verschiedener Funktionen in zwei verschiedene Ausgestaltungen von Rastmitteln ergibt sich eine sehr gute Abstimmbarkeit des Systems gegenüber den bekannten Bajonettverschlüssen. Jede der nachfolgenden Funktionen kann dabei einzeln abgestimmt werden:

- Drehmoment beim Schließen

- Drehmoment beim Öffnen

**-** Zuhaltekraft in axialer Richtung

**-** Zuhaltekraft in radialer Richtung

**-** Spiel in axialer Richtung

**-** Spiel in radialer Richtung.

Trotz dieser guten Möglichkeiten der Abstimmbarkeit des Systems wird weiterhin eine einfache Herstellbarkeit gewährleistet und es müssen keine Abschläge bei der Bedienung oder der Robustheit des Gesamtsystems in Kauf genommen werden. Erreicht wird dies durch wenigstens zwei unterschiedliche Paarungen von Rastnocken und Rastebenen welche korrespondierend zueinander einmal außen am Umfang und einmal innen am Umfang im Bereich der Verbindung der beiden Gehäuseteile angeordnet sind.

Gemäß einer vorteilhaften Ausgestaltung der Erfindung sind die Gehäuseteile im Urformverfahren insbesondere Spritzgießverfahren hergestellt. Dadurch ist der Bajonettverschluss sehr günstig herzustellen. Der Verschluss kann direkt in den Werkzeughälften abgebildet werden.

Es ist vorteilhaft, wenn die erste Anzahl von Rastmitteln miteinander korrespondierende jeweils parallel zur rotativen Verdrehrichtung angeordnete Halteebenen zur Aufnahme der axialen Zuhaltekraft und Bestimmung des axialen Spiels aufweist. Weiterhin weist die erste Anzahl von Rastmitteln senkrecht zur rotativen Verdrehrichtung angeordnete Halteebenen zur Bestimmung des radialen Spiels auf. Die wirksame Länge der parallel zur rotativen Verdrehrichtung angeordneten Halteebenen hängt hierbei von der maximalen Zuhaltekraft ab. Je höher die maximale Zuhaltekraft ist desto länger sollte die wirksame Länge der parallel angeordneten Ebenen sein. Hierbei weisen die Rastmittel des ersten Gehäuseteils sowie die Rastmittel des zweiten Gehäuseteils die korrespondierend zueinander ausgeführten parallelen Ebenen auf, wobei der Endanschlag am Gehäuseteil als Gegenlager fungiert. Durch die senkrecht zur rotativen Verdrehrichtung angeordneten Halteebenen lässt sich das radiale Spiel einstellen. Hierbei wird ein Rastmittel des einen Gehäuseteils von einer senkrecht angeordneten Halteebene des anderen Gehäuseteils in der Endposition beim Verschließen aufgenommen.

Gemäß einer vorteilhaften Ausgestaltung der Erfindung weist die zweite Anzahl von Rastmitteln miteinander korrespondierende parallel zur rotativen Verdrehrichtung angeordnete Ebenen einerseits und unter einem spitzen Winkel zu diesen Ebenen stehende Drehmomentebenen andererseits auf. Durch die Wahl der jeweiligen Winkel der Drehmomentebenen lässt sich das Drehmoment zum Öffnen der Verbindung unabhängig vom Drehmoment zum Schließen der Verbindung einstellen. Durch die Variation der Steigung der beiden Drehmomentebenen lässt sich jeweils ein höheres oder ein niedrigeres Drehmoment zum Öffnen oder Schließen vorgeben.

Es ist weiterhin vorteilhaft, wenn die an einem ersten Gehäuseteil angeordneten Rastmittel an ihrer der Gehäuseteilöffnung zugewandten Seite eine in Richtung der Öffnung weisende Kuppe aufweisen. Von dieser Kuppe fallen Auftreffebenen zu beiden Seiten der Kuppe in Richtung des anderen Endes des ersten Gehäuseteils ab. Dies hat den Sinn, dass bei einem Zusammenfügen der beiden Gehäuseteile die Rastmittel eines zweiten Gehäuseteils beim Auftreffen auf die Rastmittel des ersten Gehäuseteils an deren Kuppen und oder deren Auftreffebenen abgleiten und so ein Zusammenfügen zu ermöglichen. Dies hat den Vorteil, dass die beiden Gehäuseteile in jedweder Position zueinander zum Verschließen ineinander gesetzt werden können, entweder wird eine Position getroffen bei der die Rastmittel aneinander berührungslos vorbeigehen und dann beim Verdrehen einrasten oder die Rastmittel treffen im ersten Schritt aufeinander und gleiten durch die Kuppen und die damit verbundenen Auftreffebenen leicht und einfach aufeinander ab bis zu einer Position bei der ein verbinden der Gehäuseteile durch verdrehen möglich ist.

Ein für das oben genannte Gehäuse notwendiges erstes Gehäuseteil weist im Bereich der Verbindungsstelle zum zweiten Gehäuseteil wenigstens zwei gleich ausgestaltete erste Rastmittel auf, derart dass die ersten Rastmittel mit korrespondierenden zweiten Rastmitteln des zweiten Gehäuseteils zusammen wirken. Die am ersten Gehäuseteil angeordneten Rastmittel sind bevorzugt gleichmäßig am Umfang des Gehäuses im Bereich der Verbindungsstelle angeordnet und weisen alle die gleiche Form auf. Daher bietet es sich an, bei unterschiedlich großen Gehäuseteilen das erste Gehäuseteil als das größere der beiden Gehäuseteile auszuführen. Sollte es durch geänderte Anforderungen zu einer Änderung bestimmter Faktoren im Zusammenhang mit der Verbindung der Gehäuseteile wie z. B. Haltekräfte, Drehmomentkräfte oder Spiel kommen, ist es günstiger das Spritzgießwerkzeug für das kleinere Gehäuseteil also in diesem Beispiel das zweite Gehäuseteil zu modifizieren.

Gemäß einer vorteilhaften Ausgestaltung des ersten Gehäuseteils weisen die gleich ausgestalteten ersten Rastmittel eine im Wesentlichen zur Verdrehrichtung parallele Ebene mit einer Wirkfläche welche in die der Öffnung entgegen gesetzte Richtung weist auf. Jeweils an den Enden der parallelen Ebene sind einstückig damit verbundene im Wesentlichen senkrecht dazu verlaufende Ebenen angeordnet. Die freien Enden dieser zwei senkrecht verlaufenden Ebenen weisen in die der Gehäuseteilöffnung gegenüberliegende Richtung. Dadurch bilden die parallele Ebene und die senkrecht dazustehenden Ebenen einstückig eine innen geöffnete U-Form. Die U-Form ergibt sich aus fertigungstechnischer Hinsicht im Spritzgießverfahren, um eine Materialanhäufung durch eine beispielsweise massive Kontur ohne Ausbildung eines Hohlraums innerhalb des U's. Es ist jedoch auch denkbar unter Beibehaltung der parallelen Ebene eine Dreiecksform zu verwenden, wobei das Innere des Dreiecks ausgespart ist um wiederum eine Materialanhäufung zu vermeiden. Diese Ausführung wäre allerdings durch zusätzlich benötigte Schieber im Spritzgießwerkzeug aufwendiger.

Das zweite Gehäuseteil für ein oben genanntes Gehäuse weist im Bereich der Verbindungsstelle zum ersten Gehäuse wenigstens zwei unterschiedlich ausgestaltete zweite Rastmittel auf, derart dass die eine Ausgestaltung der zweiten Rastmittel in Verbindung mit den ersten Rastmitteln des ersten Gehäuseteils Haltefunktionen übernehmen und die zweite Ausgestaltung der zweiten Rastmittel in Verbindung mit den ersten Rastmitteln des ersten Gehäuseteils Drehmomenteinstellungsfunktionen zum Öffnen und Schließen übernehmen. Hier wird deutlich, dass gleich gestaltete Rastmittel des ersten Gehäuseteils mit wenigstens zwei unterschiedlichen Ausgestaltungen von Rastmitteln des zweiten Gehäuseteils einerseits eine Abstimmbarkeit des Verbindungssystems bewirken und andererseits eine günstige und einfache Herstellungsmöglichkeit bieten. Durch das Trennen von Halte- und Drehmomentfunktionen durch unterschiedliche Ausgestaltungen der Rastmittel des zweiten Gehäuseteils besteht die Möglichkeit, Einzelfunktionen zu ändern ohne damit direkten Einfluss auf andere Funktionen zu nehmen.

Gemäß einer vorteilhaften Ausgestaltung des zweiten Gehäuseteils weist eine erste Ausgestaltung der Rastmittel des Gehäuses eine parallel zur rotativen Verdrehrichtung angeordnete, in Richtung der der geöffneten Seite des Gehäuseteils gegenüberliegenden Seite, zugewandte Halteebene mit einer Wirkfläche zur Aufnahme der axialen Zuhaltekraft und Bestimmung des axialen Spiels, sowie eine senkrecht dazu, mit ihrem freien Ende in entgegengesetzter Richtung der Gehäuseteilöffnung weisende, angeordnete Halteebene mit einer Wirkfläche zur Einstellung des radialen Spiels und als Endanschlag beim Verschließen auf. Das Rastmittel weist dabei in etwa die Form eines liegenden L's auf, wobei die längere Seite parallel zur Verdrehrichtung angeordnet ist und der Schenkel des L's senkrecht dazu in die der Gehäuseteilöffnung entgegen gesetzte Richtung weist. Die parallel zur Verdrehrichtung angeordnete Halteebene mit ihrer Wirkfläche auf der der Gehäuseöffnung gegenüberliegenden Seite korrespondiert mit einer Wirkfläche einer ebenso parallelen Halteebene der Rastmittel des ersten Gehäuseteils. Die Wirkflächen stützen sich dabei gegenseitig ab wobei das Gegenlager hierzu durch den Anschlag der beiden Gehäuseteile zueinander gebildet wird. Im Gegensatz dazu bewirkt die senkrecht dazu angeordnete Halteebene mit ihrer Wirkfläche einen Endanschlag wobei durch eine Verlegung der senkrechten Halteebene das radiale Spiel eingestellt werden kann.

Es ist vorteilhaft wenn die zweite Ausgestaltung der Rastmittel des zweiten Gehäuseteils unter einem spitzen Winkel zur rotativen Verdrehrichtung stehende, sich von einer Kuppe erstreckende, Drehmomentebenen aufweisen, welche Wirkflächen auf der der Öffnung des Gehäuseteils entgegengesetzten Seite aufweisen. Durch die Wahl der jeweiligen Winkel zur Ebene parallel zur Verdrehebene lässt sich das Drehmoment zum Öffnen der Verbindung unabhängig vom Drehmoment zum Schließen der Verbindung einstellen. Die Winkel zur Bestimmung des Drehmoments beim Schließen liegen in etwa zwischen null und sechzig Grad, bevorzugt zwischen fünf und dreißig Grad zur Ebene parallel zur Verdrehrichtung. Die Winkel zur Bestimmung des Drehmoments zum Öffnen der Verbindung liegen in einem Bereich etwa von null bis achtzig Grad bevorzugt von zehn bis sechzig Grad. Die axiale Distanz zwischen der Kuppenspitze und dem Endpunkt des Rastmittels des ersten Gehäuseteils im geschlossenen Zustand bestimmt die Zuhaltekraft der Verbindung in radialer Richtung. So ist deutlich zu erkennen, dass durch eine Winkeländerung in einfachster Weise die Kräfte, die zum Öffnen oder Verschließen der Verbindung benötigt werden, verändert und eingestellt werden können.

In einer weiteren vorteilhaften Ausgestaltung des zweiten Gehäuseteils weisen beide Ausgestaltungen der am zweiten Gehäuseteil angeordneten Rastmittel an ihrer der Gehäuseteilöffnung zugewandten Seite eine in Richtung der Öffnung weisende Kuppe auf. Von dieser Kuppe fallen Auftreffebenen zu beiden Seiten der Kuppe in Richtung des anderen Endes des zweiten Gehäuseteils ab. Somit ist gewährleistet, dass bei einem Zusammenfügen der beiden Gehäuseteile für den Fall, dass die Rastmittel beim Zusammenfügen aufeinander treffen, die Rastmittel des ersten Gehäuseteils beim Auftreffen auf die Rastmittel des zweiten Gehäuseteils an deren Kuppen und oder deren Auftreffebenen abgleiten um so ein Zusammenfügen zu ermöglichen. Diese bedeutet, dass beim Zusammenfügen keine bestimmte Position gesucht werden muss, um beide Gehäuseteile miteinander verbinden zu können, sondern dass beide Gehäuseteile einfach direkt aufeinander gesteckt werden können und die Rastmittel entweder direkt aneinander vorbei gleiten oder eben beim Auftreffen durch die abfallenden Auftreffebenen und die Kuppe die Gehäuseteile derart aufeinander abgleiten dass jederzeit ein Verbinden der Gehäuseteile möglich ist.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Figur 1 zeigt ein erfindungsgemäßes erstes Gehäuseteil in einer schematischen Ansicht,

die Figur 2 zeigt ein erfindungsgemäßes zweites Gehäuseteil, ebenfalls in einer schematischen Ansicht,

Figur 3 zeigte eine erste Ausgestaltung bestehend aus Rastebene und Rastnocken, und

Figur 4 zeigt eine zweite Ausgestaltung der Verbindung zwischen Rastnocken und Rastebene.

### Ausführungsform(en) der Erfindung

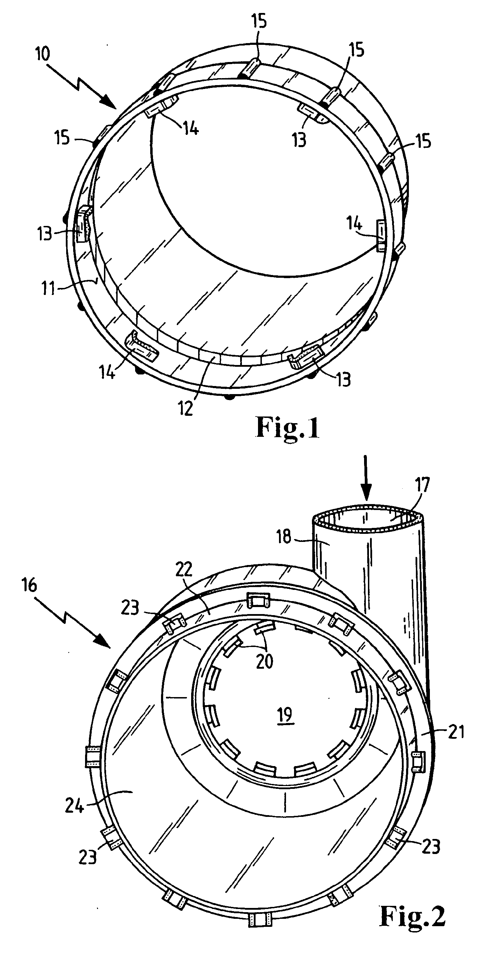

Die Figur 1 zeigt ein topfförmiges erstes Gehäuseteil 10 welches im Wesentlichen hohlzylindrisch geformt ist, und eine zylindrische Öffnung aufweist. Im Bereich der Öffnung wird eine innen umlaufende Oberfläche 11 durch eine Absatzkante 12 im ersten Gehäuseteil 10 gebildet. Der Durchmesser des ersten Gehäuseteils 10 macht im Bereich der Absatzkante 12 einen Durchmessersprung zu einem größeren Durchmesser im Bereich der Öffnung. An der innen umlaufenden Oberfläche 11 sind in regelmäßigen Abständen zwei verschiedene Ausgestaltungen von Rastmitteln 13, 14 angeordnet. Die äußere Mantelfläche des ersten Gehäuseteils 10 weist im Bereich der Öffnung Griffnocken 15 zur Handhabung des ersten Gehäuseteils auf. Das erste Gehäuseteil ist im Urformprozess insbesondere Spritzgießprozess hergestellt.

Die Figur 2 zeigt ein zweites ebenfalls im Wesentlichen topfförmiges zylindrisches Gehäuseteil 16 mit einem Einlass 17 welcher durch einen Stutzen 18 welcher tangential an einem Ende des zweiten Gehäuseteils 16 angeordnet ist auf. Am gleichen Ende des zweiten Gehäuseteils 16 ist ein Auslass 19 konzentrisch auf der Stirnseite des zweiten Gehäuseteils 16 angeordnet, wobei der Auslass 19 Klipsnasen 20 zur dichten Aufnahme eines hier nicht dargestellten Auslassstutzens aufweist. Auf der gegenüberliegenden Seite des zweiten Gehäuseteils 16 wird durch eine Anschlagkante 21 ein Durchmessersprung hervorgerufen, wodurch der Durchmesser des Gehäuses im Bereich einer Öffnung 24, welche gegenüber dem Auslass 19 angeordnet ist, geringer ist, als auf der der Öffnung 24 gegenüberliegenden Seite. Ab der Anschlagkante 21 bis zur Öffnung 24 wird eine äußere Mantelfläche 22 gebildet an der im korrespondierenden Abstand zu den Rastebenen 13, 14 der ersten Figur Rastnocken 23 angeordnet sind. Bei der Verbindung der Gehäuseteile 10, 16 stößt der äußere Rand des ersten Gehäuseteils 10 auf die Anschlagkante 21 des zweiten Gehäuseteils 16 auf, und durch eine relative Verdrehbewegung zwischen erstem Gehäuseteil 10 und zweitem Gehäuseteil 16 lassen sich beide Gehäuseteile 10, 16 über die Rastmittel 13, 14, 23 lösbar miteinander verbinden.

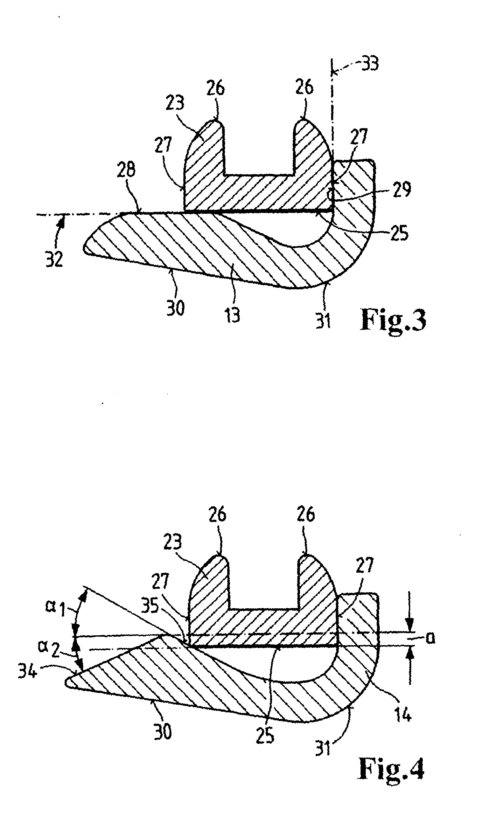

Die Figur 3 zeigt eine erste Ausgestaltung aus Rastebene 13 und Rastnocken 23 im geschlossenen Zustand der beiden Gehäusehälften 10, 16. Der Rastnocken 23 weist eine parallel zur Verdrehrichtung der beiden Gehäusehälften 10, 16 liegende Wirkfläche 25 auf sowie zwei Kuppen 26 welche über Flächen 27 mit der Wirkfläche 25 verbunden sind. Die Form der Rastnocken 23 ähnelt einem geöffneten U, wobei die Form derart gewählt wurde, um eine Materialanhäufung zu vermeiden. Es sind auch andere Formen denkbar, wobei die Wirkfläche 25 und die senkrecht dazu angeordneten Flächen 27 aufrechterhalten sein müssen. Die Rastnocken 23 welche im zweiten Gehäuseteil 16 angeordnet sind, sind dort derart positioniert, dass die Öffnung des U's in Richtung der Öffnung 24 weist. Die erste Ausgestaltung der Rastebene 13 des ersten Gehäuseteils 10 weist ebenfalls eine Wirkfläche 28 auf, welche ebenso parallel zur Verdrehrichtung der beiden Gehäusehälften 10, 16 zueinander angeordnet ist, wie die Wirkfläche 25 des Rastnockens 23. Mit der ebenen Wirkfläche 28 ist eine senkrecht dazu angeordnete Wirkfläche 29 vorgesehen, welche mit einer der Flächen 27 des Rastnockens 23 korrespondiert und so einen radialen Endanschlag bildet. Weiterhin weist die Rastebene 13 eine schräg zur Wirkfläche 28 angeordnete Auftreffebene 30 auf welche an ihren höchsten Punkten in eine Kuppe 31 mündet. Die Gesamtform der Rastebene 13 ist in etwa mit einem liegenden L zu vergleichen, wobei die Wirkfläche 28 und der kurze Schenkel des L's in Richtung des geschlossenen ersten Gehäuseteils 10 weisen. Der Rastnocken 23 und die erste Rastebene 13 stehen im verbundenen Zustand der beiden Gehäuseteile 10, 16 über eine Halteebene 32 und eine Radialabschlussebene 33 miteinander in Kontakt. Die Halteebene 32 bestimmt die Zuhaltekräfte in axialer Richtung und das axiale Spiel und die Radialabschlussebene 33 bestimmt das radiale Spiel. Über eine Änderung der Höhe der Halteebene 32 gegenüber der Anschlagkante 21 des zweiten Gehäuseteils 16 vergrößert sich beispielsweise die Zuhaltekraft in axialer Richtung und verlängert das axiale Spiel. Dabei ist es sinnvoll bei einer Vergrößerung der Zuhaltekraft die Wirkfläche 28 der Rastebene 13 zu vergrößern, um so einen größeren Kontaktbereich zwischen Rastnocken 23 und Rastebene 13 zu schaffen.

Die Figur 4 zeigt die Kombination aus zweiter Ausgestaltung der Rastebene 14 mit dem Rastnocken 23. Den vorherigen Figuren entsprechende Bauteile sind mit den gleichen Bezugszeichen versehen. Die zweite Rastebene 14 weist hierbei eine in einem Winkel α2 zur Verdrehebene angeordnete Wirkfläche 34, welche das Drehmoment beim Schließen der Verbindung bestimmt und eine weitere Wirkfläche 35 welche unter einem Winkel α1 zur Verdrehebene angeordnet ist und die das Drehmoment beim Öffnen der Verbindung bestimmt, auf. Die Höhendifferenz a zwischen dem Schnittpunkt der Wirkflächen 34 und 35 und der Wirkfläche 25 des Rastnockens 23 bestimmt die Zuhaltekraft der Verbindung in radialer Richtung. Über eine Variation des Winkels α1 lässt sich das Drehmoment zum Öffnen verändern, dieser Winkel kann zwischen null und achtzig Grad liegen, bevorzugt liegt er zwischen zehn und sechzig Grad. Der Winkel α2 bestimmt das Drehmoment zum Schließen der Verbindung, dieser liegt zwischen null und sechzig Grad bevorzugt zwischen fünf und dreißig Grad. Bevor die Gehäuseteile 10, 16 über eine Verdrehbewegung relativ zueinander verbunden werden können müssen erst die beiden Gehäuseteile 10, 16 axial ineinander gesteckt werden. Dabei ist es einerseits möglich, dass die Rastnocken 23 des zweiten Gehäuseteils 16 und die Rastebenen 13, 14 des ersten Gehäuseteils 10 nicht übereinander liegen, und die beiden Gehäuseteile 10, 16 bis zum Erreichen der Anschlagkante 21 axial zusammengefügt werden können. Im Anschluss daran kann über eine Relativdrehbewegung zueinander das Verriegeln des Bajonettverschlusses erfolgen. Für den Fall dass die Rastnocken 23 und die Rastebenen 13, 14 im axialen Fügevorgang direkt übereinander liegen, treffen die Kuppen 26 des Rastnockens 23 auf entweder die Kuppen 31 oder die Auftreffebenen 30 der Rastebenen 13, 14. Durch die Ausführung der Auftreffebenen 30 in einem Winkel zur Verdrehrichtung gleiten die Rastnocken 23 dann automatisch auf den Rastebenen 13, 14 ab, bis das erste Gehäuseteil 10 auf die Anschlagkante 21 des zweiten Gehäuseteils 16 trifft. Der darauf folgende Verbindungsvorgang gleicht dem zuvor beschriebenen Verschlussvorgang der Gehäuseteile 10, 16. Man sieht also, dass durch die Trennung der Halte- und der Drehmomentfunktion durch verschiedene Ausgestaltungen der Rastebenen eine individuelle Einstellung von Funktionsparametern möglich ist, ohne die anderen Funktionsparameter mit zu beeinflussen. Auf diese Art und Weise lässt sich der Bajonettverschluss des Gehäuses individuell an die gewünschten Anforderungen anpassen wobei er einfach in der Herstellung und preisgünstig bleibt.

## Patentansprüche

1. Gehäuse, insbesondere Filtergehäuse, vorzugsweise Luftfiltergehäuse, aufweisend ein erstes Gehäuseteil (10) und ein zweites Gehäuseteil (16), wobei das erste Gehäuseteil (10) und das zweite Gehäuseteil (16) über eine rotative Relativdrehbewegung zueinander lösbar verbindbar sind, wobei an den Gehäuseteilen (10, 16) jeweils zueinander korrespondierende Rastmittel (13, 14, 23) angeordnet sind, **dadurch gekennzeichnet, dass** eine erste Anzahl von Rastmitteln (13) Mittel zum Halten der Verbindung zwischen den Gehäuseteilen (10, 16) aufweisen und eine zweite Anzahl von Rastmitteln (14) Mittel zur Einstellung des Drehmomentes zum Öffnen und Mittel zur Einstellung des Drehmomentes zum Schließen des Gehäuses aufweisen, wobei die zweite Anzahl von Rastmitteln (14, 23) miteinander korrespondierende parallel zur rotativen Verdrehrichtung angeordnete Ebenen (25) einerseits und unter einem spitzen Winkel zu diesen Ebenen (25) stehende Drehmomentebenen (34, 35) andererseits aufweisen, derart, dass durch die Wahl der jeweiligen Winkel das Drehmoment zum Öffnen der Verbindung unabhängig zum Drehmoment zum Schließen der Verbindung eingestellt werden kann.

2. Gehäuse nach Anspruch 1, **dadurch gekennzeichnet dass** die Gehäuseteile im Urformverfahren hergestellt sind.

3. Gehäuse nach einem der vorhergehenden Ansprüche, **dadurch gekennzeichnet, dass** die erste Anzahl von Rastmitteln (13, 23) miteinander korrespondierende jeweils parallel zur rotativen Verdrehrichtung angeordnete Halteebenen (28, 25) zur Aufnahme der axialen Zuhaltekraft und Bestimmung des axialen Spiels, sowie senkrecht zur rotativen Verdrehrichtung angeordnete Halteebenen (27, 29) zur Bestimmung des radialen Spiels aufweist.

4. Gehäuse nach einem der vorhergehenden Ansprüche, **dadurch gekennzeichnet, dass** die an dem zweiten Gehäuseteil (16) angeordneten Rastmittel (23) an ihrer der Gehäuseteilöffnung zugewandten Seite eine in Richtung der Öffnung weisende Kuppe aufweisen, von der Auftreffebenen zu beiden Seiten der Kuppe in Richtung des anderen Endes des zweiten Gehäuseteils (16) abfallen, derart, dass bei einem Zusammenfügen der beiden Gehäuseteile (10, 16) die Rastmittel des ersten Gehäuseteils (10) beim Auftreffen auf die Rastmittel des zweiten Gehäuseteils (16) an deren Kuppen und / oder deren Auftreffebenen abgleiten um so ein Zusammenfügen zu ermöglichen.

5. Erstes Gehäuseteil (10) für ein Gehäuse gemäß Anspruch 1, **dadurch gekennzeichnet, dass** im Bereich der Verbindungsstelle zum zweiten Gehäuseteil (16) wenigstens zwei unterschiedlich ausgestaltete zweite Rastmittel (13, 14) angeordnet sind, derart, dass die eine Ausgestaltung der zweiten Rastmittel (13, 14) in Verbindung mit den ersten Rastmitteln (23) des zweiten Gehäuseteils (16) Haltefunktionen übernehmen und die zweite Ausgestaltung der zweiten Rastmittel (14) in Verbindung mit den ersten Rastmitteln (23) des zweiten Gehäuseteils (16) Drehmomenteinstellungsfunktionen zum Öffnen und Schließen übernehmen, wobei die zweite Ausgestaltung der Rastmitteln (14) unter einem spitzen Winkel zur rotativen Verdrehrichtung stehende, sich von einer Kuppe (26) erstreckende, Drehmomentebenen (34, 35) aufweisen, welche Wirkflächen auf der der Öffnung des Gehäuseteils (10) entgegengesetzten Seite aufweisen, derart, dass durch die Wahl der jeweiligen Winkel zur Ebene parallel zur Verdrehebene das Drehmoment zum Öffnen der Verbindung unabhängig zum Drehmoment zum Schließen der Verbindung eingestellt werden kann.

6. Erstes Gehäuseteil (10) gemäß Anspruch 5, **dadurch gekennzeichnet, dass** die erste Ausgestaltung der Rastmittel (13) des ersten Gehäuseteils (10) eine parallel zur rotativen Verdrehrichtung angeordnete in Richtung der der geöffneten Seite gegenüberliegenden Seite zugewandte Halteebene mit einer Wirkfläche (28) zur Aufnahme der axialen Zuhaltekraft und Bestimmung des axialen Spiels, sowie eine senkrecht dazu, mit ihrem freien Ende entgegengesetzt der Richtung der Gehäuseteilöffnung weisende, angeordnete Halteebene mit einer Wirkfläche (29) zur Einstellung des radialen Spiels und als Endanschlag beim Verschließen aufweist.

7. Erstes Gehäuseteil (10) nach einem der Ansprüche 5 oder 6, **dadurch gekennzeichnet, dass** beide Ausgestaltungen der am ersten Gehäuseteil (10) angeordnete Rastmittel (13, 14) an ihrer der Gehäuseteilöffnung zugewandten Seite eine in Richtung der Öffnung weisende Kuppe aufweisen von der Auftreffebenen zu beiden Seiten der Kuppe in Richtung des anderen Endes des ersten Gehäuseteils abfallen, derart, dass bei einem Zusammenfügen der beiden Gehäuseteile die Rastmittel des zweiten Gehäuseteils (16) beim Auftreffen auf die Rastmittel des ersten Gehäuseteils (10) an deren Kuppen und / oder deren Auftreffebenen abgleiten um so ein Zusammenfügen zu ermöglichen.

## Claims

1. Housing, in particular a filter housing, preferably an air filter housing, featuring a first housing component (10) and a second housing component (16), the first housing component (10) and the second housing component (16) being detachably connectable to each other via a rotating rotary relative movement, with locking devices (13, 14,23) corresponding to each other that are attached to the housing components (10, 16), **characterized in that** a first number of locking devices (13) feature means to maintain the connection between the housing components (10, 16) and a second number of locking devices (14) feature means to adjust the torque for opening and means to adjust the torque for closing the housing, the second number of locking devices (14, 23) featuring on the one hand sections (25) corresponding with each other and arranged parallel to the rotating torsion direction and on the other hand torque sections (34, 35) being at an acute angle to these sections (25) in such a way that by selecting the respective angle the torque for opening the connection can be adjusted independently of the torque for closing the connection.

2. Housing according to claim 1, **characterized in that** the housing components are originally molded.

3. Housing according to one of the above claims, **characterized in that** the first number of locking devices (13, 23) features locking sections (28, 25) corresponding with each other and arranged respectively parallel to the rotating torsion direction for receiving the axial locking pressure and for determining the axial play, as well as locking sections (27, 29) arranged perpendicularly to the rotating torsion direction for determining the radial play.

4. Housing according to one of the above claims, **characterized in that** the locking devices (23) arranged at the second housing component (16) feature a round end at their side facing the housing component opening that points into the direction of the opening, from which contact surfaces slope down on both sides of the round end towards the other end of the second housing component (16) in such a way, that when assembling both housing components (10, 16) the locking devices of the first housing component (10) slide along the round ends and / or the contact surfaces of the second housing component (16) when they contact them in order to enable the assembly.

5. First housing component (10) for a housing according to claim 1, **characterized in that** in the area of the joint for the second housing component (16) at least two differently designed second locking devices (13, 14) are arranged in such a way, that one embodiment of the second locking devices (13, 14) in conjunction with the first locking devices (23) of the second housing component (16) ensures locking functions and the second embodiment of the second locking devices (14) in conjunction with the first locking devices (23) of the second housing component (16) ensures torque adjustment functions for opening and closing, the second embodiment of the locking devices (14) featuring torque sections (34, 35) that are at an acute angle to the rotating torsion direction and extend from a round end (26), and feature effective surfaces at the side opposite to the opening of the housing component (10) in such a way, that by selecting the respective angle to the section parallel to the torsion section the torque for opening the connection can be adjusted independently of the torque for closing the connection.

6. First housing component (10) according to claim 5, **characterized in that** the first embodiment of the locking devices (13) of the first housing component (10) features a locking section arranged parallel to the rotating torsion direction facing the open side of the opposing side with an effective surface (28) for receiving the axial locking pressure and for determining the axial play as well as a locking section arranged perpendicularly to it, facing with its free end the opposite direction of the housing component opening with an effective surface (29) for adjusting the radial play and as end stop during closing.

7. First housing component (10) according to one of the claims 5 or 6, **characterized in that** both embodiments of the locking devices (13, 14) arranged at the first housing component (10) feature a round end at their side facing the housing component opening that points into the direction of the opening, from which contact surfaces slope down on both sides of the round end towards the other end of the first housing component in such a way, that when assembling both housing components the locking devices of the second housing component (16) slide along the round ends and / or the contact surfaces of the first housing component (10) when they contact them in order to enable the assembly.

## Revendications

1. Boîtier notamment boîtier de filtre de préférence boîtier de filtre comportant une première partie de boîtier (10) et une seconde partie de boîtier (16),
la première partie de boîtier (10) et la seconde partie de boîtier (16) étant reliées l'une à l'autre de manière amovible par un mouvement de rotation relatif,
les parties de boîtier (10, 16), ayant des moyens d'enclipsage (13, 14, 23) qui se correspondent,
**caractérisé en ce qu'**
un premier ensemble de moyens d'encliquetage (13) comportent des moyens pour retenir la liaison entre les parties de boîtier (10, 16) et un second ensemble de moyens d'enclipsage (14) comporte des moyens pour régler le couple nécessaire à l'ouverture et des moyens pour régler le couple nécessaire à la fermeture du boîtier,
le second ensemble de moyens d'enclipsage (14, 23) ayant d'une part des plans (25) correspondants, parallèles au sens de rotation et d'autre part des plans de couple (34, 35) faisant un angle aigu par rapport aux plans (25) de façon que par le choix de l'angle respectif, on puisse régler le couple d'ouverture de la liaison indépendamment du couple de fermeture de la liaison.

2. Boîtier selon la revendication 1,
**caractérisé en ce que**
les parties de boîtier sont fabriquées par un procédé de transformation.

3. Boîtier selon l'une des revendications précédentes,
**caractérisé en ce que**
le premier ensemble de moyens d'enclipsage (13, 23) comporte des plans de retenue (28, 25) correspondants, respectifs, parallèles au sens de rotation, pour recevoir la force de traction axiale et pour déterminer le jeu axial et des plans de retenue (27, 29) perpendiculaires au sens de rotation pour déterminer le jeu radial.

4. Boîtier selon l'une des revendications précédentes,
**caractérisé en ce que**
les moyens d'enclipsage (23) associés à la seconde partie de boîtier (16) ont sur leur côté tourné vers l'ouverture de la partie de boîtier, un sommet tourné dans la direction de l'ouverture, entre le plan d'arrivée jusque vers les deux côtés du sommet en descendant en direction de l'autre extrémité de la seconde partie de boîtier (16) de façon qu'en assemblant les deux parties de boîtier (10, 16), les moyens d'enclipsage de la première partie de boîtier (10) lors de la rencontre avec les moyens d'enclipsage de la seconde partie de boîtier (16) glissent sur leur sommet et sur leur plan de rencontre pour permettre l'assemblage.

5. Première partie de boîtier (10) pour un boîtier selon la revendication 1,
**caractérisée en ce que**
dans la zone du point de liaison avec la seconde partie de boîtier (16), il y a au moins deux seconds moyens d'enclipsage (13, 14) de forme différente de façon qu'un mode de réalisation des seconds moyens d'enclipsage (13, 14) assure des fonctions de retenue en liaison avec les premiers moyens d'enclipsage (23) de la seconde partie de boîtier (16) et que la seconde réalisation des seconds moyens d'enclipsage (14) en liaison avec les premiers moyens d'enclipsage (23) de la seconde partie de boîtier (16) assure des fonctions de réglage de couple pour ouvrir et fermer,
la seconde réalisation du moyen d'enclipsage (14) ayant des plans de couple (34, 35) faisant un angle aigu par rapport au sens de rotation, et s'étendant à partir d'un sommet (26), et ayant des surfaces actives sur le côté opposé à celui de l'ouverture de la partie de boîtier (10) de façon que par le choix de l'angle respectif par rapport au plan parallèle au plan de rotation, le couple pour ouvrir la liaison se règle indépendamment du couple pour fermer la liaison.

6. Première partie de boîtier (10) selon la revendication 5,
**caractérisée en ce que**
la première réalisation des moyens d'enclipsage (13) de la première partie de boîtier (10) comporte un plan de retenue parallèle à la direction de rotation, tourné en direction du côté opposé au côté ouvert, et ayant une surface active (28) pour recevoir la force de retenue axiale et pour déterminer le jeu axial ainsi qu'un plan de retenue muni d'une surface active (29), perpendiculaire au plan précédent et dont l'extrémité libre va dans la direction opposée à l'ouverture de la partie de boîtier, pour régler le jeu radial et servir de butée de fin de course lors de la fermeture.

7. Première partie de boîtier (10) selon l'une des revendications 5 ou 6,
**caractérisée en ce que**
les deux réalisations des moyens d'enclipsage (13, 14) prévues sur la première partie de boîtier (10) ont sur leur côté tourné vers l'ouverture de la partie de boîtier, un sommet dirigé dans le sens de l'ouverture, dont les plans de rencontre descendent des deux côtés du sommet, en direction de l'autre extrémité de la première partie de boîtier, de façon que lors de l'assemblage des deux parties de boîtier, les moyens d'enclipsage de la seconde partie de boîtier (16) à l'arrivée sur les moyens d'enclipsage de la première partie de boîtier (10), glissent sur les sommets et/ou les plans de rencontre pour permettre ainsi l'assemblage.
